Europäisches Patentamt

(19) European Patent Office

Office européen des brevets

(11) Publication number: **0 205 330**
**B1**

(12) EUROPEAN PATENT SPECIFICATION

(45) Date of publication of patent specification: **03.10.90**

(51) Int. Cl.⁵: **B 65 D 21/04,** B 65 D 85/52

(21) Application number: **86304372.5**

(22) Date of filing: **09.06.86**

(54) A holder for trays, pots, dishes or the like.

(30) Priority: **11.06.85 GB 8514779**

(43) Date of publication of application:
**17.12.86 Bulletin 86/51**

(45) Publication of the grant of the patent:
**03.10.90 Bulletin 90/40**

(84) Designated Contracting States:
**BE DE FR GB LU NL**

(56) References cited:
**EP-A-0 138 281**
**DE-A-3 313 839**
**US-A-3 319 799**

(73) Proprietor: **VANHALEY LIMITED**
**12, Ruins Lane, Harwood Nr. Bolton**
**Greater Manchester (GB)**

(72) Inventor: **Haley, Christopher Partington**
**12, Ruins Lane Harwood**
**Nr. Bolton Greater Manchester (GB)**

(74) Representative: **Barker, Rosemary Anne et al**
**Barlow, Gillett & Percival 94 Market Street**
**Manchester M1 1PJ (GB)**

# Description

This invention relates to a holder for trays, pots, dishes and the like, and more particularly to a holder for seed boxes or trays in which live plants are grown and sold according to the preambles of claims 1 and 3 (known from DE—A—3313839).

The growing and selling of plants, for example bedding plants, on a commercial scale is very labour intensive and the storage of plants takes up a great deal of space. Accordingly any device which will allow a worker dealing with plants to organise him or herself more efficiently and which will facilitate the handling of the plants as well as reducing the storage space required at any stage between planting and the point of sale would be most welcome.

Apertured frames with legs, which are specifically adapted for holding plant pots, are known. These can beneficially used in a nursery when pricking out or planting out for holding a group of pots together. Also, the pots in such a frame can be carried as a group and can remain in the frame with the bases of the pots standing on the ground or on capillary matting whilst the plants grow to an appropriate size for sale. However, such frames are not rigid and are rather difficult to carry as they have no edge extensions or hand holds. Moreover, when the plants are ready to go to market, the frames containing the pots cannot be stacked so any vehicle in which they are to be transported must be provided with shelves. The same is true in respect of storage and display of plant pots which are in such frames at the point of sale. For these reasons, such frames are usually used only at the nursery and the plant pots are removed therefrom when they are ready to go to market.

For the transport, storage and display of plants in boxes or pots, trays with mesh bases are known, which trays can be stacked one above the other even when full of plants in their respective containers by virtue of upwardly projecting columns or pillars. These trays cannot, however, be used for holding the boxes or pots whilst the plants are growing at the nursery as the mesh bases thereof prevent intimate contact between the bases of the boxes or pots and the ground or the capillary matting from which the plants obtain water and nutrients by capillary action.

Thus, at present, frames are known which are useful for growing plants and in which the plants in their containers can be carried around the nursery (although not very conveniently), and special mesh trays are known for transport, storage and display when the plants are to be marketed. However, the plants in their boxes or pots have to be manually transferred from the frames to the trays (if these are used at all) when they are to be taken to market.

It is an object of the present invention to provide a holder for trays, boxes, pots etc., which can be used with ease at all stages, namely for planting out, for growing, for carrying, for transporting, for storing and for display of plants in their containers in the nursery and in the marketplace. This will obviously reduce the necessary handling of the plant containers and reduce labour time and cost for nurserymen.

Pursuant hereto, the present invention provides a holder for trays, pots, dishes or the like comprising a frame formed by side walling and one or more crosspieces extending between points at or near the upper edge of the side walling so as to define apertures for reception of trays, pots, dishes or the like which are to be releasably engaged or supported by the frame with lower portions thereof hanging downwardly from the level of the crosspiece or crosspieces, characterised in that the frame is provided with spaced apart upwardly projecting pillars which have, at their upper ends, means for engagement with and support of a respective frame whereby such holders may be stacked directly above the other.

However, the invention also includes within its scope a holder wherein the trays are permanently or integrally provided in the form of a plurality of depressed regions defined between flat crosspiece regions of a web which extends between upper edge regions of the side walling.

In all cases the frame is preferably rectangular with the pillars located at the corners thereof. Moreover, the pillars are advantageously at least equal in height to the side walling, and preferably at least twice the height of the side walling to permit a variety of space-saving stacking arrangements. If the pillars are between one and two times the height of the side walling a plurality of holders can be stacked with alternate holders disposed transversely, yet directly on top of each other. Further, if the pillars are twice the height of the side walling, perhaps even slightly more, a plurality of holders can be stacked in staggered array, with every third holder in direct alignment and the two intermediate holders disposed obliquely relative thereto at different angles (yet holders of each group still directly on top of each other).

The holder in accordance with the invention has, of course, been specifically designed for seed boxes or trays of seedlings. Sloping connection pieces are therefore advantageously provided between the pillars and the adjacent side walling so that holders containing trays filled with soil or compost can be stacked as aforesaid without the soil or compost being compressed by the bottom of an overlying tray.

Other features and advantages will become apparent as the invention is described further, by way of example, with reference to the accompanying drawings, in which:

Fig. 1 is a perspective view of a preferred practical embodiment of the holder of the invention;

Fig. 2 is a partially sectional side view illustrating three holders, as shown in Fig. 1, containing trays of seedlings and stacked directly on top of each other;

Fig. 3 is a partially sectional side view illustrating six holders, as shown in Fig. 1, in stacked arrangement, with alternate holders disposed transversely, but directly on top of each other;

Fig. 4 is a plan view of the stacked arrangement shown in Fig. 3; and

Fig. 5 is a plan view of a plurality of holders, as shown in Fig. 1, in another stacked arrangement wherein every third holder is in alignment and the two intermediate holders are disposed obliquely relative thereto at differing angles, but still directly on top of each other.

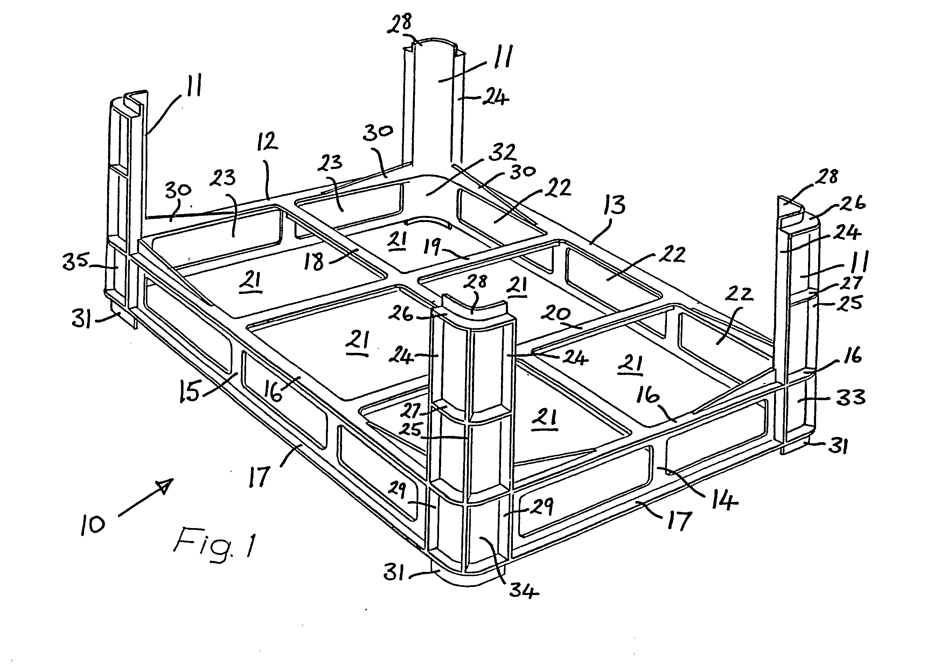

As illustrated in Fig. 1, a preferred embodiment of the holder of the invention comprises a substantially rectangular frame 10 having four upwardly projecting pillars 11, one at each corner. The frame 10 consists of side walling in the form of four shallow side walls 12 to 15, about 4 or 5 cm high, which are joined at respective rounded corner regions 32 to 35. Narrow outwardly projecting rims or flanges 16, 17 are provided around the upper and lower edges or the side walling. Crosspieces 18, 19, 20, which are also provided with flanges so that they are T-shaped in cross-section for strength, extend between the upper edges of the side walls 12 to 15. A single crosspiece 18 extends between the respective midpoints of the opposing shorter side walls 12, 14, whilst two crosspieces 19, 20 extend between corresponding points one and two thirds the way along the length of the opposing longer side walls 13, 15, respectively, so that six generally rectangular apertures 21 are defined. In this particular example, each aperture 21 is of exactly the right size to receive and support a standard size of seed tray known as a half-box, as will be described further hereinbelow.

Three longitudinal slots 22 are formed in each longer side wall 13, 15, the length of each slot 22 being approximately the same as the length of each aperture 21 in the longitudinal direction of the frame 10. Two longitudinal slots 23 are also formed in each shorter side wall 12, 14, the length of these slots 23 being approximately equal to the width of each aperture 21 in the transverse direction of the frame 10. The rectangular side walling with connecting crosspieces 18, 19, 20 is a relatively rigid and robust structure and the slots 22, 23 provide convenient handholds for lifting the frame 10 when the apertures 21 are filled with boxes.

The upwardly projecting pillars 11 are curved in cross-section to match the curvature of the corner regions 32 to 35 of the side walling from which they extend. They each have outwardly projecting flanges 24 at their side edges and a further vertical, centrally located, outward projecting flange 25. Also a flange 26 joins the tops of the side flanges 25 with a further horizontal flange 27 located midway of the height of each pillar 11. A narrow upturned location edge 28 remains above the top flange 26 of each pillar 11. The pillars 11 extend upwardly from the frame 10 for a height equal or slightly greater than twice the height of the side walling, namely to 10 cm or a little more.

In the corner regions 32 to 35 of the side walling flanges 29 extend between the upper and lower rims 16, 17 as a continuation of the side flanges 24 and central flanges 25 of the pillars 11. This, in conjunction with all the other flanges enhances the strength of the frame 10 and the entire holder.

A sloping triangular-shaped connection piece 30 is provided at each side of each pillar 11, between the relevant pillar 11 and the adjacent side walls of the frame 10. The purpose of this will be explained shortly.

Directly below each pillar 11 and each corner region 32 to 35 a foot 31 is formed by a narrow curved strip of material projecting downwardly from the outer edge of the lower rim 17 in the region between the flanges 29. It will thus be appreciated that holders of this configuration can be stacked one above the other with the feet 31 of one frame 10 resting on the top flanges 26 of the pillars 11 of a lower holder whilst the upturned edges 28 of the pillars 11 of the lower holder simultaneously support the lower rim 17 in the corner regions 32 to 35 of the upper holder. In otherwords there are respective interengaging L-shaped elements on the base of the frame side walling and on the top of the pillars 11.

The holder as just described is produced in one piece by injection moulding of plastics, e.g. polyethylene which is relatively pliable and durable. It is designed to be used and re-used for several years, but it is not too expensive to be discarded after plants grown in containers supported therein have been sold.

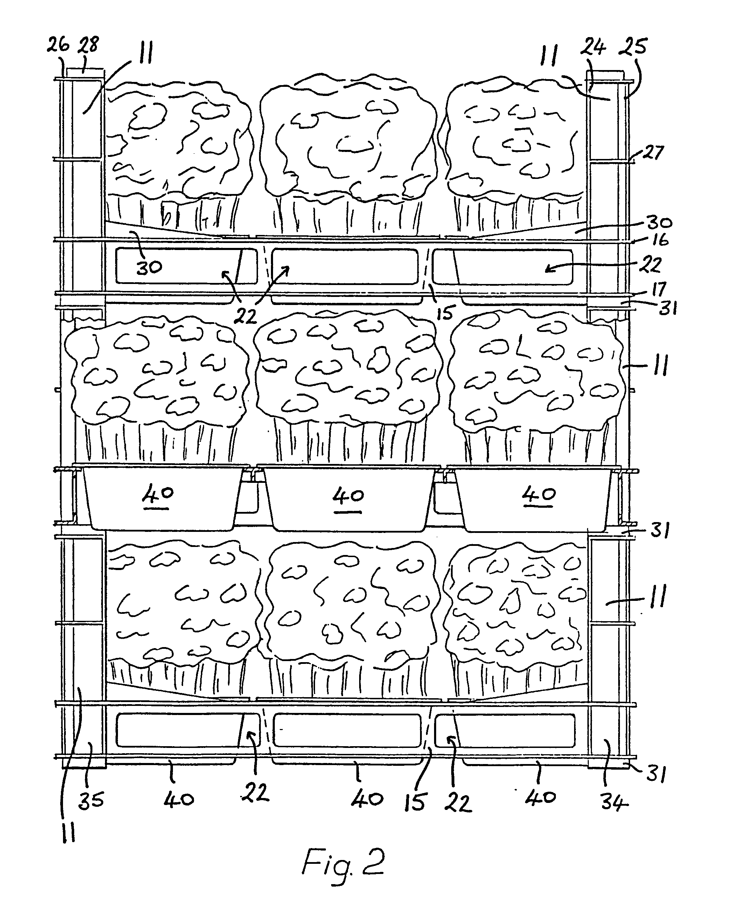

As previously mentioned, the apertures 21 are of an appropriate size to receive half-boxes 40 (see Fig. 2), which are shallow vacuum-formed plastics trays with outwardly turned rims. The half-boxes 40 fit neatly into the respective apertures 21 and their rims are supported upon the relevant crosspieces 18, 19, 20 and the upper rim 16 of the side walling so that the main portions of the boxes 40 hang downwards from the level of the crosspieces and the bases of the boxes 40 will rest directly on any surface on which the feet 31 are placed.

In use, six half-boxes 40 filled with compost or earth are fitted into the respective apertures 21 of the holder and seeds or seedlings are quickly planted out in each box. The holder is then placed in an appropriate location for the growth of the plants with the holder feet 31 and the bases of the boxes 40 resting on earth or on capillary matting. The holder with six boxes 40 in place is, of course, extremely easy to handle and carry as it is simply picked up by means of some of the slots 22, 23 in the side walls 12 to 15. Accordingly, when very large numbers of boxes are involved the arrangement of these in easy-to-carry groups of six greatly speeds the whole planting out operation.

The holder can be carried in the same simple way when the plants are to be taken to market and are to be loaded and unloaded into a vehicle. During transit and at the point of sale holders can be stacked in alignment directly on top of each other with the boxes of plants still in place, as shown in Fig. 2, as the height of the pillars 11 allows plenty of room for the plants between the respective frames 10.

These holders are especially useful because they can advantageously be used during all stages from planting out to retail sale without the need for removing the plant containers (i.e. boxes 40) from or to special holders suitable only for growing or special holders suitable only for eventual display at the point of sale.

A further, extremely important advantage of this design of holder is that it can be stacked in space-saving manner when it is not being used to hold boxes of seedlings or seeds for growth, for example during transit on return from the point of sale to the nursery or at the nursery prior to sowing of seeds or picking out of seedlings.

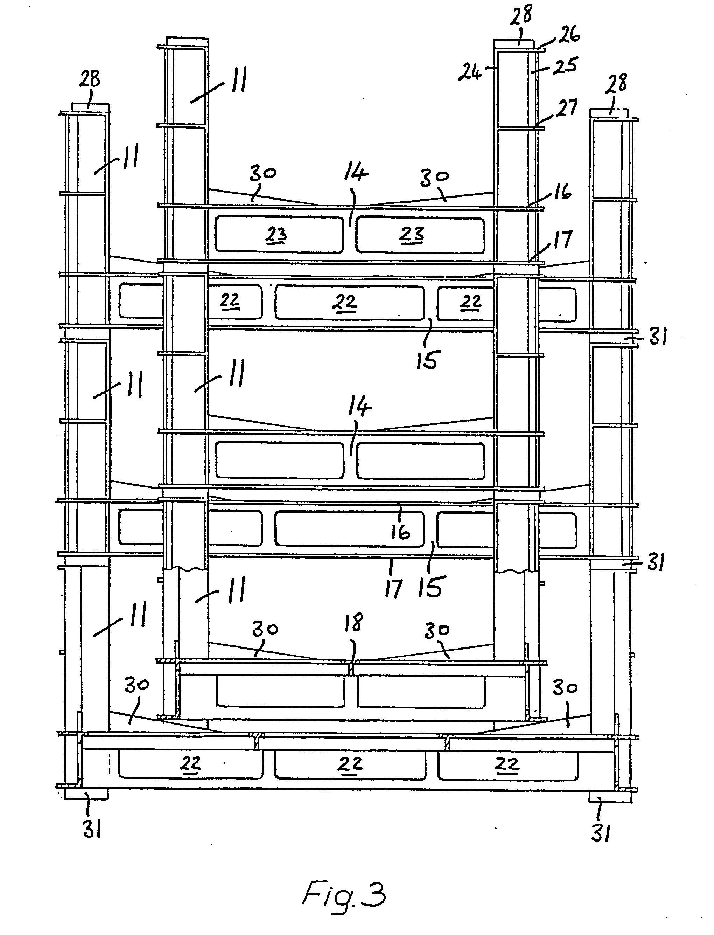

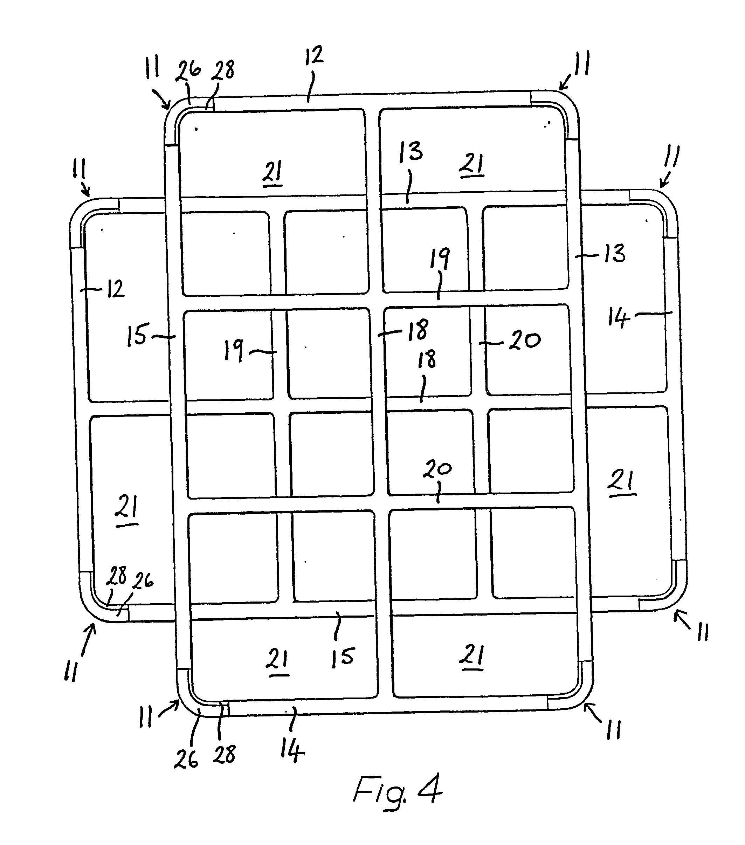

A first stacking arrangement is indicated in Figs. 3 and 4. As previously mentioned, the pillars 11 are twice the height of the side walling of the frame 10. A plurality of holders can thus readily be stacked, as shown, with alternate holders disposed approximately at right angles to each other, but directly on top of the pillars 11 of the underlying holders of the same orientation. With this arrangement, each holder is supported at a slight spacing above the frame 10 of the underlying holder by the sloping connection pieces 30. This means that holders containing boxes 40 filled to the brim with soil or compost (ready for sowing or picking out) can be stacked in this manner without the soil or compost being compressed by the bottom of the overlying box 40.

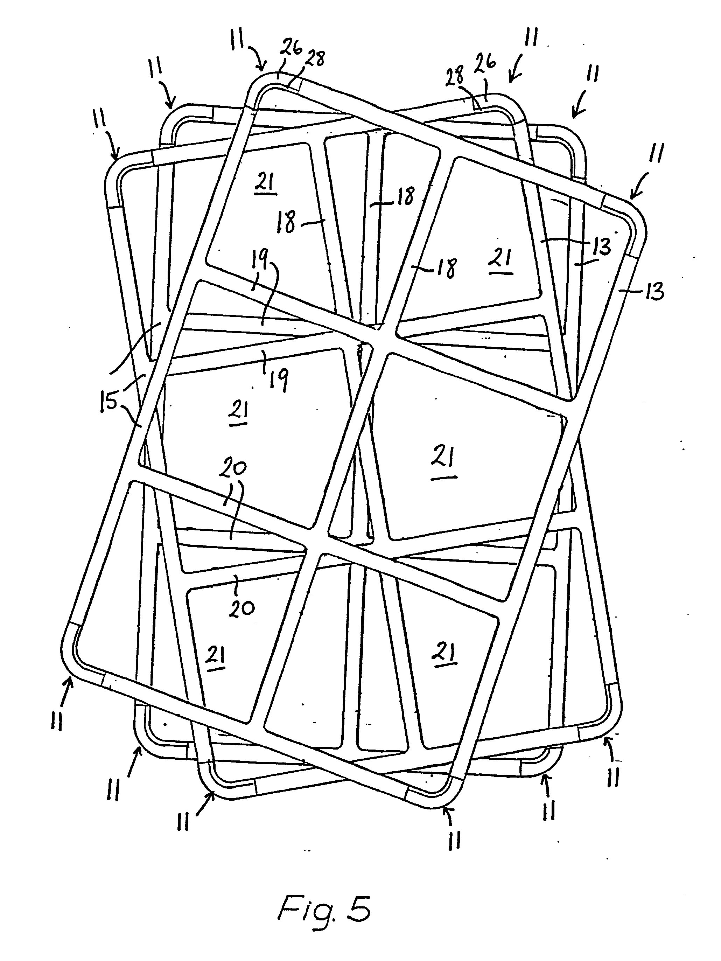

Another stacking arrangement which is even more economical as regards the number of holders which can be packed into a given space is illustrated schematically in Fig. 5. As the pillars 11 are twice the height of the side walling (or slightly more), two obliquely disposed holders can be located between each pair of aligned holders, one of which is supported upon the tops of the pillars 11 of the other as described above. The obliquely disposed holders are themselves in alignment with and stacked directly above similarly orientated holders. Thus a staggered or "spiral" array is achieved.

In particular, the holder may be made with only four apertures for reception of half boxes. Also, other means for interengagement between the upper ends of the pillars and the underside of the frame or side walling may easily be envisaged. Furthermore, each foot may be formed by a respective curved corner portion of a continuous strip of material projecting downwardly from the outer edge of the lower rim. The latter arrangement makes it easier, for example, to slide the holder along the surfaces of side-by-side, horizontally spaced-apart, shelves.

The holder may also be produced by means other than injection moulding.

Whilst the above-described embodiment of the holder is provided with apertures wherein trays or boxes etc. are releasably engageable, in a further embodiment the trays may be permanently located or integrally formed. In this case, a substantially continuous web extends between upper edge regions of the side walling, the web being provided with one or more flat, crosspiece regions with depressed regions or "integral trays" defined therebetween. Further seed boxes or plant pots may then be releasably located in these depressions.

## Claims

1. A portable holder for trays, pots, dishes or the like comprising a frame (10) formed by side walling (12 to 15) and an article receiving web extending between remote points at or near the upper edge of the side walling so as to define apertures (21) for reception of said trays, pots, dishes or the like which in use will be releasably engaged or supported by the frame (10) with lower portions thereof hanging down from the level of the crosspiece or crosspieces (18, 19, 20), characterised in that said web consists of one or more crosspieces (18, 19, 20) and that the frame (10) is provided with spaced apart, upwardly projecting pillars (11) which have, at their upper ends, means (24, 26) for engagement with and support of a respective frame (10) whereby such holders may be stacked directly above each other.

2. A portable holder as claimed in claim 1 in combination with trays, pots, dishes or the like which are releasably located in the said apertures and are engaged or supported by the frame (10) with their lower portions hanging downwards from the level of the crosspiece or crosspieces (18, 19, 20).

3. A portable holder comprising a frame (10) formed by upright side walling (12 to 15) and an article receiving web extending between upper edge regions of the side walling, characterised in that said web is provided with one or more flat crosspiece regions which extend between remote points at or near the upper edge of the side walling and define therebetween a plurality of depressed regions which are capable of receiving and supporting trays, pots, dishes or the like, and in that the frame (10) is provided with spaced apart upwardly projecting pillars (11) which have, at their upper ends, means (24, 26) for engagement with and support of a respective frame (10) whereby such holders may be stacked directly above each other.

4. A portable holder as claimed in claim 1, 2 or 3 wherein the frame (10) is rectangular and the pillars (11) are located at the corners thereof.

5. A portable holder as claimed in claim 4 wherein the pillars (11) are at least equal in height to the side walling (12 to 15) so that a plurality of such holders can be stacked with alternate holders disposed transversely (Figs. 3 and 4).

6. A portable holder as claimed in claim 4 or 5 wherein the height of the pillars (11) is at least twice the height of the side walling (12 to 15) so that a plurality of such holders can be stacked in staggered array, with every third holder in direct alignment and the intermediate holders disposed obliquely relative thereto (Fig. 5).

7. A portable holder as claimed in any preceding claim wherein the apertures (21) or the depressed regions, respectively, are substantially rectangular and are adapted in size for reception of seed boxes or trays of seedlings.

8. A portable holder as claimed in any preceding claim wherein four or six apertures (21) or depressed regions, respectively, are provided in the frame (10).

9. A portable holder as claimed in any preceding claim wherein slots (22, 23) are provided in the side walling (12 to 15) as hand holds.

10. A portable holder as claimed in any preceding claim wherein sloping connection pieces are provided between the pillars (11) and the adjacent side walling (12 to 15).

11. A portable holder as claimed in any preceding claim and formed in one piece by injection moulding of plastics.

12. A portable holder as claimed in claim 11 wherein the side walling (12 to 15), the crosspieces (18, 19, 20) and the pillars (11) are provided with flanges for enhanced strength and rigidity.

## Patentansprüche

1. Tragbarer Halter für Näpfe, Töpfe, Schalen o.ä. mit einem aus Seitenwandungen (12—15) geformten Rahmen (10) und einem Gewebe zur Aufnahme von Gegenständen, das sich zwischen entfernten Punkten an oder nahe der oberen Kante der Seitenwandung so erstreckt, daß es Öffnungen (21) zur Aufnahme der Näpfe, Töpfe, Schalen o.ä. bildet, die beim Gebrauch lösbar mit dem Rahmen (10) verbunden oder von ihm getragen sind, wobei ihr unterer Teil von der Ebene des Kreuzstückes oder der Kreuzstücke (18, 19, 20) herunterhängt, dadurch gekennzeichnet, daß das Gewebe aus einem oder mehreren Kreuzstücken (18, 19, 20) besteht und daß der Rahmen (10) mit in Abstand voneinander angeordneten, nach oben stehenden Ständern (11) versehen ist, die an ihren oberen Enden Einrichtungen (24, 26) zur Verbindung mit und zur Abstützung eines entsprechenden Rahmens (10) aufweisen, wodurch diese Halter direkt übereinandergestapelt werden können.

2. Tragbarer Halter nach Anspruch 1 in Verbindung mit Näpfen, Töpfen, Schalen o.ä., die lösbar in den Öffnungen angeordnet und mit dem Rahmen 10 verbunden oder von ihm getragen sind, wobei ihr unterer Teil von der Ebene des Kreuzstückes oder der Kreuzstücke (18, 19, 20) herunterhängt.

3. Tragbarer Halter mit einem aus senkrechten Seitenwandungen (12—15) geformten Rahmen (10) und einem Gewebe zur Aufnahme von Gegenständen, das sich zwischen den oberen Kantenbereichen der Seitenwandung erstreckt, dadurch gekennzeichnet, daß das Gewebe mit einem oder mehreren flachen Kreuzstückbereichen versehen ist, die sich zwischen entfernten Punkten an oder nahe der oberen Kante der Seitenwandung erstrecken und dazwischen eine Vielzahl von vertieften Bereichen bilden, die Näpfe, Töpfe, Schalen o.ä. aufnehmen und tragen können, und daß der Rahmen (10) mit in Abstand voneinander angeordneten, nach oben stehenden Ständern (11) versehen ist, die an ihrem oberen Ende Einrichtungen (24, 26) zur Verbindung mit und zum Abstützen eines entsprechenden Rahmens (10) aufweisen, wodurch solche Halter direkt übereinandergestapelt werden können.

4. Tragbarer Halter nach einem der Ansprüche 1 bis 3, wobei der Rahmen (10) rechteckig ist und die Ständer (11) an seinen Ecken angeordnet sind.

5. Tragbarer Halter nach Anspruch 4, wobei die Ständer (11) mindestens von gleicher Höhe wie die Seitenwandungen (12—15) sind, so daß eine Vielzahl solcher Halter abwechselnd mit quer angeordneten Haltern gestapelt werden können (Fig. 3 und 4).

6. Tragbarer Halter nach Anspruch 4 oder 5, wobei die Höhe der Ständer (11) mindestens zweimal so hoch ist wie die der Seitenwandungen (12—15), so daß eine Vielzahl solcher Halter in versetzter Anordnung gestapelt werden können, wobei jeder dritte Halter in genauer Übereinstimmung und die dazwischenliegenden Halter schräg dazu angeordnet sind (Fig. 5).

7. Tragbarer Halter nach einem der vorhergehenden Ansprüche, wobei die Öffnungen (21) oder die vertieften Bereiche im wesentlichen rechteckig und in der Größe der Aufnahme von Samenbehältern oder Näpfen für Sämlinge angepaßt sind.

8. Tragbarer Halter nach einem der vorhergehenden Ansprüche, wobei vier oder sechs Öffnungen (21) oder vertiefte Bereiche im Rahmen (10) angeordnet sind.

9. Tragbarer Halter nach einem der vorhergehenden Ansprüche, wobei Schlitze (22, 23) als Handgriffe in den Seitenwandungen (12—15) angebracht sind.

10. Tragbarer Halter nach einem der vorhergehenden Ansprüche, wobei geneigte Verbindungsstücke zwischen den Ständern (11) und den angrenzenden Seitenwandungen (12—15) angeordnet sind.

11. Tragbarer Halter nach einem der vorhergehenden Ansprüche, der einstückig durch Kunststoff-Spritzguß ausgebildet ist.

12. Tragbarer Halter nach Anspruch 11, wobei die Seitenwandungen (12—15), die Kreuzstücke (18, 19, 20) und die Ständer (11) zur Erhöhung der Stabilität und Steifheit mit Flanschen versehen sind.

## Revendications

1. Support portable pour plateaux, pots, plats ou équivalents comportant un châssis (10) formé par un cloisonnage latéral (12 à 15) et une partie plate recevant l'objet s'étendant entre les points éloignés sur ou proches du bord supérieur du cloisonnage latéral de façon à définir des ouvertures (21) destinées à recevoir lesdits plateaux, pots, plats ou équivalents qui seront en utilisation engagés de façon amovible ou supportés par le cadre (10) avec des parties inférieures de celui-ci s'étendant vers le bas à partir du niveau de la pièce transversale ou des pièces transversales (18—19—20), support caractérisé en ce que ladite partie plate consiste en une ou plusieurs pièces transversales (18—19—20) et en ce que le cadre (10) est prévu avec des colonnes espacées les unes des autres et faisant saillie vers le haut (11) qui ont à leurs extrémités supérieures des moyens (24—26) destinés à l'engagement avec un autre cadre et au support du cadre respectif (10) lorsque de tels supports peuvent être superposés directement les uns au-dessus des autres.

2. Support portable tel que revendiqué dans la revendication 1 en combinaison avec des plateaux, pots, plats ou équivalents qui sont situés de façon amovible dans lesdites ouvertures et qui sont engagés ou supportés par le cadre (10) avec leur partie inférieure s'étendant vers le bas à partir du niveau de la pièce transversale ou des pièces transversales (18—19—20).

3. Support portable comprenant un cadre (10) formé d'un cloisonnage latéral dirigé verticalement (12 à 15) et une partie plate recevant un objet s'étendant entre les zones de bord supérieur de cloisonnage latéral, caractérisé en ce que ladite surface plate est pourvue d'une ou plusieurs zones de pièces transversales plates qui s'étendent entre les points éloignés sur ou proches du bord supérieur du cloisonnage latéral et qui définissent entre elles une pluralité de zones creuses qui sont capables de recevoir et de supporter des plateaux, pots, plats ou analogues et en ce que le cadre (10) est prévu avec des colonnes (11) espacées et dirigées vers le haut, colonnes qui ont à leur extrémité supérieur des moyens (24—26) pour l'engagement avec un cadre respectif (10) et pour supporter ce dernier, de tels supports pouvant être empilés directement les uns au dessus des autres.

4. Support portable tels que revendiqué dans les revendications 1, 2 ou 3 caractérisés en ce que le cadre (10) est rectangulaire et les colonnes 11 sont disposées aux coins de celui-ci.

5. Support portable tel que revendiqué dans la revendication 4, caractérisé en ce que les colonnes (11) sont au moins de hauteur égale à celle du cloisonnage latéral (12 à 15) de sorte qu'une pluralité de tels supports peuvent être empilés avec des supports alternés disposés transversalement (Fig. 3 et 4).

6. Support portable tel que revendiqué dans la revendication 4 ou 5, caractérisé en ce que la hauteur des colonnes (11) est au moins égal à 2 fois la hauteur du cloisonnage latéral (12 à 15) de sorte qu'une pluralité de tels supports peuvent être empilés en agencement d'empilage, avec chaque troisième support dans un alignement direct et les supports intermédiaires disposés de façon oblique par rapport à ceux-ci (Fig. 5).

7. Support portable tel que revendiqué dans l'une quelconque des revendications précédentes caractérisé en ce que les ouvertures (21) ou les régions creuses, respectivement sont sensiblement rectangulaires et sont adaptés en dimension pour recevoir des boîtes d'ensemencement ou des plateaux de semences.

8. Support portable tel que revendiqué dans l'une quelconque des revendications précédentes caractérisée en ce que quatre ou six ouvertures (21) ou zones creuses, respectivement sont prévues dans le cadre (10).

9. Support portable tel que revendiqué dans l'une quelconque des revendications précédentes caractérisée en ce que des fentes (22—23) sont prévues dans le cloisonnage latéral (12 à 15) pour former des poignées.

10. Support portable revendiqué selon l'une quelconque des revendications précédentes caractérisée en ce que des pièces de connexion inclinées sont prévues entre les colonnes (11) et le cloisonnage latéral adjacent (12 à 15).

11. Support portable revendiqué selon l'une quelconque des revendications précédentes et formé d'une seule pièce par moulage par injection de matière plastique.

12. Supports portables revendiqués selon la revendication 11 caractérisée en ce que le cloisonnement latéral (12 à 15), les pièces transversales (18—19—20) et les colonnes (11) sont pourvues de brides pour augmenter la rigidité et la résistance.

Fig. 1

EP 0 205 330 B1

Fig. 2

Fig.3

Fig. 4

Fig. 5